# EUROPÄISCHE PATENTANMELDUNG

(11) **EP 1 107 553 A2**
(43) Veröffentlichungstag der Anmeldung: **13.06.2001**
(21) Anmeldenummer: 00118093.4
(22) Anmeldetag: 23.08.2000
(51) Int. Cl.: H04M 3/42

(54) **Verfahren zur Charakterisierung des Betriebs einer Nebenstellenanlage**

(30) Priorität: 04.12.1999 DE 19958511
(71) Anmelder: Tenovis GmbH & Co. KG, 60326 Frankfurt (DE)
(72) Erfinder: Adelmann, Petra, 83104 Hohenthann (DE); Reitberger, Christian, 83052 Bruckmühl (DE)
(74) Vertreter: Bohnenberger, Johannes, Dr.

(57) **Zusammenfassung**

Es wird ein Verfahren zur Charakterisierung des Betriebs einer Nebenstellenanlage (5) vorgeschlagen, wobei die Nebenstellenanlage (5) von einem Programm gesteuert wird, wobei das Programm einen ersten Programmteil (60) und einen zweiten Programmteil (70) umfaßt, wobei das Programm Bezeichner umfaßt, wobei den Bezeichnern durch das Programm Daten zugeordnet werden, wobei durch das Programm wenigstens einem Bezeichner (63) in unterschiedlichen Programmteilen (60, 70) unterschiedliche Daten (66, 76) zugeordnet werden und wobei mittels eines Dokumentationsprogrammes dem wenigstens einen Bezeichner (63) die Zuordnung wenigstens eines Teils des unterschiedlichen Daten (66, 76) in Abhängigkeit der Programmteile (60, 70) dargestellt wird.

## Beschreibung

### Stand der Technik

Die Erfindung geht aus von einem Verfahren nach der Gattung des Hauptanspruchs. Es ist bekannt, mittels eines Dokumentationsprogramms den Betrieb einer Nebenstellenanlage, die von einem Programm gesteuert wird, zu charakterisieren.

### Vorteile der Erfindung

Das erfindungsgemäße Verfahren mit den Merkmalen des Hauptanspruchs hat demgegenüber den Vorteil, daß der Betrieb einer Nebenstellenanlage, insbesondere einer Telekommunikationsanlage, der durch ein Programm definiert wird, in übersichtlicher Weise charakterisierbar ist. Somit kann beispielsweise eine Beschreibung des den Betrieb der Nebenstellenanlage definierenden Programms auf sehr einfache Weise erstellt werden.

Weiterhin besteht durch das erfindungsgemäße Verfahren eine sehr enge Kopplung zwischen der Beschreibung des Betriebs der Nebenstellenanlage und der tatsächlichen Realisierung des Betriebs der Nebenstellenanlage in dem Programm. Somit ist eine Beschreibung oder Dokumentation des Betriebs der Nebenstellenanlage immer aktuell und von hoher Qualität, weil die Charakterisierung des Betriebs der Nebenstellenanlage automatisch durch das erfindungsgemäße Verfahren durchgeführt wird.

Durch die Zuordnung eines mehr oder weniger großen Teils der unterschiedlichen Daten zu dem wenigstens einen Bezeichner, können verschiedene Detaillierungsgrade der Charakterisierung des Betriebs der Nebenstellenanlage ausgeführt werden.

Durch die in den Unteransprüchen angeführten Maßnahmen sind vorteilhafte Weiterbildungen und Verbesserungen des im Hauptanspruch angegebenen Verfahrens möglich.

Weiterhin ist es von Vorteil, daß das Programm Schlüsselwörter umfaßt und daß die Zuordnung wenigstens eines Teils der unterschiedlichen Daten zu dem wenigstens einen Bezeichner durch das Dokumentationsprogramm in Abhängigkeit der Schlüsselwörter dargestellt wird. Dadurch kann die erfindungsgemäße Charakterisierung des Betriebs der Nebenstellenanlage besonders einfach mittels des Dokumentationsprogramms durchgeführt werden.

Weiterhin ist es von Vorteil, daß durch das Dokumentationsprogramm die Zuordnung der unterschiedlichen Daten zu dem wenigstens einen Bezeichner für alle unterschiedlichen Daten dargestellt wird. Dadurch ist die Charakterisierung des Betriebs der Nebenstellenanlage in besonders detaillierter Weise möglich.

Weiterhin ist es von Vorteil, daß dem ersten Programmteil eine erste Klasse entspricht, daß dem zweiten Programmteil eine zweite Klasse entspricht und daß sich die zweite Klasse von der ersten Klasse ableitet. Dadurch ist es möglich, daß zur übersichtlicheren Darstellung der Charakterisierung des Betriebs der Nebenstellenanlage in die Darstellung der Zuordnung der unterschiedlichen Daten zu dem wenigstens einen Bezeichner auch die Vererbungshierarchie der unterschiedlichen Klassen beziehungsweise Programmteile miteinbezogen werden.

Weiterhin ist es von Vorteil, daß die Klassen statische Anteile, insbesondere Definitionen, die während des Betriebs der Nebenstellenanlage nicht verändert werden, und dynamische Anteile, insbesondere Funktionalitäten, die während des Betriebs der Nebenstellenanlage verändert werden, umfassen und daß die Bezeichner dynamische Anteile der Klassen repräsentieren. Dadurch ist eine sehr umfassende Charakterisierung des Betriebs der Nebenstellenanlage sehr einfach möglich. Weiterhin ist es auch möglich, Funktionalitäten, die spezifisch zu einer Klasse gehören und die in Abhängigkeit der Ebene in der Vererbungshierarchie unterschiedlich ausfallen können, auf einfache Weise in die Charakterisierung des Betriebs der Nebenstellenanlage zu integrieren.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Nebenstellenanlage und
Figur 2 die Organisation eines ersten Programmteils und eines zweiten Programmteils mit einem gemeinsamen Bezeichner, dem dynamisch unterschiedliche Daten zugeordnet werden.

### Beschreibung der Ausführungsbeispiele

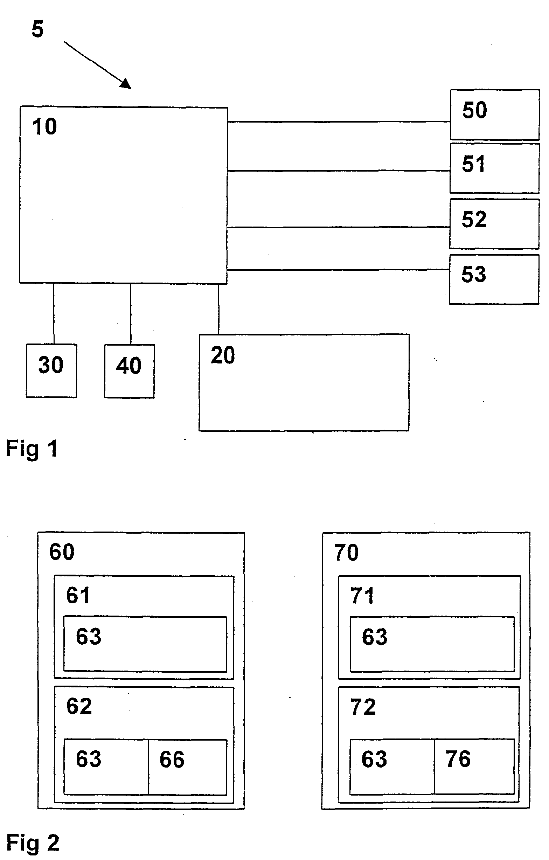

In Figur 1 ist beispielhaft eine erfindungsgemäße Nebenstellenanlage 5 dargestellt. Die Nebenstellenanlage 5 umfaßt eine Zentraleinheit 10, eine Speichereinheit 20, Eingabeeinrichtungen 30 und Ausgabeeinrichtungen 40. Dabei ist die Zentraleinheit 10 sowohl mit der Speichereinheit 20 als auch mit den Eingabeeinrichtungen 30 und den Ausgabeeinrichtungen 40 verbunden. Weiterhin umfaßt die Nebenstellenanlage 5 in Figur 1 beispielhaft einen ersten Teilnehmeranschluß 50, einen zweiten Teilnehmeranschluß 51, einen dritten Teilnehmeranschluß 52 und einen vierten Teilnehmeranschluß 53. Die Teilnehmeranschlüsse 50 bis 53 sind jeweils mit der Zentraleinheit verbunden und dienen bei der beispielhaft dargestellten Nebenstellenanlage 5 dem Anschluß von Telekommunikationsteilnehmern, das heißt beispielsweise Teilnehmerendgeräten, Nebenstellenanlagen oder ähnliches.

Die Zentraleinheit 10 kann derart vorgesehen sein, daß sie in einer einzelnen Baugruppe ausgeführt ist. Weiterhin kann die Zentraleinheit 10 auch aus einer Mehrzahl von Baugruppen bestehen, die dann lediglich logisch gemeinsam als Zentraleinheit aufgefaßt werden. So können beispielsweise die Teilnehmeranschlüsse 50 bis 53 zunächst an eine Sammelbaugruppe für Teilnehmeranschlüsse angeschlossen sein, wobei die Sammelbaugruppe dann mit einer anderen Baueinheit der Zentraleinheit 10 verbunden ist. In diesem Fall umfaßt die Zentraleinheit 10 sowohl die andere Baueinheit, als auch die Sammelbaugruppe.

Als Eingabeeinrichtungen 30 sind gewöhnliche Eingabeeinrichtungen wie beispielsweise Tastatur, Maus, Kameras, Scanner oder ähnliches vorgesehen. Als Ausgabeeinrichtungen 40 sind gewöhnliche Ausgabeeinrichtungen zur Verwendung mit Nebenstellenanlagen beziehungsweise mit Telekommunikationsanlagen vorgesehen, wie beispielsweise Bildschirme, Lautsprecher, Drucker oder ähnliches.

Die Speichereinheit 20 umfaßt erfindungsgemäß insbesondere einen Schreib-Lese-Speicher wie beispielsweise einen RAM-Speicher (Random Access Memory). In diesem Speicher wird beispielsweise der Programmcode des Programms zum Betrieb der Nebenstellenanlage 5 gespeichert. Weiterhin umfaßt die Speichereinheit 20 beispielsweise andere Typen von Speichern, insbesondere ROM-Speicher (Read Only Memory), in denen beispielsweise besonders wichtige und nicht abzuändernde Teile des Programmcodes zum Betrieb der Nebenstellenanlage 5 abgespeichert sind. Weiterhin umfaßt die Speichereinheit 20 insbesondere auch einen nicht flüchtigen aber dennoch beschreibbaren Speicher, wie beispielsweise einen magnetischen und/oder optischen Plattenspeicher, einen magnetischen und/oder optischen Bandspeicher oder ähnliches.

In Figur 2 ist die Organisation eines ersten Programmteils 60 und eines zweiten Programmteils 70 dargestellt. Der erste Programmteil 60 umfaßt einen ersten Definitionsteil 61 und einen ersten Implementierungsteil 62. Im ersten Definitionsteil 61 wird ein Bezeichner 63 definiert. Beispielsweise entspricht dem Bezeichner eine Variable, deren Typ im ersten Definitionsteil 61 bestimmt wird. Im ersten Implementierungsteil 62 wird dem Bezeichner 63 ein erstes Datum 66 zugeordnet. Beispielsweise wird der Variable, deren Typ im ersten Definitionsteil 61 bestimmt wurde, als erstes Datum 66 ein Zahlenwert, beispielsweise ein Startwert, zugeordnet. Der zweite Programmteil 70 umfaßt analog zum ersten Programmteil 60 einen zweiten Definitionsteil 71 und einen zweiten Implementierungsteil 72. Der zweite Definitionsteil 71 umfaßt ebenso wie der erste Definitionsteil 61 den Bezeichner 63. Dies ist so zu verstehen, daß der zweite Definitionsteil 71 den Bezeichner 63 entweder explizit umfaßt, das heißt definiert, oder aber daß der zweite Definitionsteil 71 den Bezeichner 63 lediglich implizit umfaßt, beispielsweise aufgrund einer Abstammung des zweiten Programmteils 70 von dem ersten Programmteil 60, wodurch sämtliche Definitionen des ersten Definitionsteils 61 auch im zweiten Definitionsteil 71 als definiert gelten.

Im zweiten Implementierungsteil 72 wird dem Bezeichner 63 ein zweites Datum 76, das sich insbesondere von dem ersten Datum 66 unterscheidet, zugeordnet.

Den verschiedenen Programmteilen 60, 70 entsprechen, beispielsweise in einem objektorientierten Programmsystem, insbesondere verschiedene Klassen beziehungsweise verschiedene Varianten einer in einer Vererbungshierarchie höher stehenden Ausgangsklasse. Eine Vererbungsrelation zwischen zwei durch Vererbung verbundene Klassen, also beispielsweise einer ersten Klasse und einer zweiten Klasse, kann folgendermaßen beschrieben werden: Die zweite Klasse stammt beispielsweise von der ersten Klasse dann ab, wenn für die zweite Klasse die erste Klasse als Vorfahr definiert wurde. Dies hat zur Folge, daß sämtliche Eigenschaften der ersten Klasse, wie zum Beispiel benutzbare Variablen, definierte Funktionalitäten oder ähnliches, sich auf die zweite Klasse übertragen, das heißt in der zweiten Klasse benutzbar sind. Die in der zweiten Klasse von der ersten Klasse übernommenen Merkmale können jedoch im Bereich der zweiten Klasse auch geändert werden. Diese Änderung von übernommenen Merkmalen entspricht einer Überdefinition, beispielsweise einer Variable oder einer Funktion bzw. einer Methode. Insofern entspricht der erste Programmteil 60 beispielsweise einer ersten Klasse 60 und der zweite Programmteil 70 entspricht einer zweiten Klasse 70.

Bei der Interpretation des ersten Programmteils 60 und des zweiten Programmteils 70 als Klassen 60, 70 entsprechen den Definitionsteilen 61, 71 sogenannte Klassendeklarationen 61, 71, die die statischen Anteile von Datenstrukturen, beispielsweise deren Typ, enthalten.

Auf diese Datenstrukturen werden in den Klassen diverse Funktionalitäten, beispielsweise Einrichten der Datenstruktur, Ändern der Datenstruktur, Testen der Datenstruktur, Hinzufügen der Datenstruktur, Entfernen der Datenstruktur, angewendet. Dies geschieht innerhalb einer Methodenimplementierung 62, 72. Die Methodenimplementierung 62, 72 einer Klasse entspricht dem Implementierungsteil 62, 72 der Programmteile 60, 70. Durch Überdefinition einer Datenstruktur beziehungsweise einer Funktionalität ist es möglich, die Behandlung einer Datenstruktur in einer Klasse, die sich von einer übergeordneten Klasse ableitet, anders zu gestalten als in der übergeordneten Klasse. Dies ist in Figur 2 dadurch verdeutlicht, daß dem Bezeichner 63 im ersten Implementierungsteil 62 das erste Datum 66 zugeordnet wird und daß dem Bezeichner 63 im zweiten Implementierungsteil 72 das zweite Datum 76 zugeordnet wird. Dem Bezeichner 63 entspricht somit die Benennung einer Datenstruktur, dem ersten Datum 66 und dem zweiten Datum 76 entsprechen beispielsweise unterschiedliche numerische Werte, die dem Bezeichner 63 zugeordnet werden, und der erste Implementierungsteil 62 entspricht der Methodenimplementierung 62 des als übergeordnete Klasse 60 aufgefaßten ersten Programmteil 60 und der zweite Implementierungsteil 72 entspricht der Methodenimplementierung 72 des als abgeleitete Klasse aufgefaßten zweiten Programmteil 70.

Ein nicht dargestelltes Dokumentationsprogramm erkennt die Zuordnung von unterschiedlichen Daten 66, 76 zu dem Bezeichner 63 im Kontext von unterschiedlichen Programmteilen 60, 70. Dies wird beispielsweise mit Hilfe von Schlüsselwörtern realisiert. Solche Schlüsselwörter werden direkt an den Stellen des Programmcodes, an denen die Definition bzw. die Überdefinition durchgeführt wird, eingefügt. Auf diese Weise ist es möglich, die unterschiedlichen Daten 66, 76, die dem Bezeichner 63 im Kontext von verschiedenen Programmteilen 60, 70 zugeordnet werden, zu erkennen und auf übersichtliche Weise, beispielsweise in Form einer Tabelle als Ausdruck oder auf einem Ausgabegerät wie einem Drucker oder einem Bildschirm, darzustellen. Es ist auf diese Weise insbesondere möglich, eine Dokumentation der verschiedenen Definitionen von Datenstrukturen, also beispielsweise des ersten Bezeichners 63, innerhalb einer komplexen Programmstruktur zu erstellen. Hierzu arbeitet das Dokumentationsprogramm zunächst die Vererbungshierarchie der verschiedenen Klassen beziehungsweise der verschiedenen Programmteile eines Programmsystems durch. Die Erkennung der Vererbungshierarchie erfolgt beispielsweise ebenfalls auf der Grundlage von Schlüsselwörtern beziehungsweise bestimmten Syntaxstrukturen der verwendeten Programmiersprache, die Vererbungsbeziehungen zwischen Programmteilen beziehungsweise zwischen Klassen für das Dokumentationsprogramm erkennbar machen.

Die Zusammenstellung einer Beschreibung aller Datenstrukturen beziehungsweise aller Bezeichner für eine zu dokumentierende Klasse beziehungsweise für ein zu dokumentierendes Programmteil 60, 70 erfolgt durch das Dokumentationsprogramm unter der Abarbeitung der Vererbungshierarchie beziehungsweise des Klassenverbandes und der jeweiligen Kennzeichnung der verschiedenen Datenstrukturen. Die Zusammenstellung einer Beschreibung sowohl der Datenstrukturen als auch der beteiligten Klassen, erfolgt ebenfalls unter Abarbeitung der Vererbungshierarchie beziehungsweise des Klassenverbandes. Zur Erstellung einer solchen Beschreibung muß der Programmcode im Anschluß än Schlüsselwörter, die der Beschreibung dienen, jeweils den Inhalt der Beschreibung umfassen. Die Beschreibung eines Programmsystems erfolgt dabei insbesondere auf verschiedenen Ebenen, beispielsweise auf der Ebene der Klassen beziehungsweise Programmteile, auf der Ebene der Datenstrukturen und/oder auf der Ebene der funktionalen Anteile von Klassen. Für die Beschreibung einer Klasse sind beispielsweise folgende Kategorien von Interesse: die Bezeichnung der Klasse, das Verhalten der Klasse, das Zeitintervall, in der die Klasse aktiv ist, der Verweis auf weitere beteiligte Klassen bzw. Programmteile, oder ähnliches. Für die Beschreibung von Datenstrukturen sind beispielsweise folgende Kategorien von Interesse: die Bezeichnung der Datenstruktur, der Typ der Datenstruktur, oder ähnliches. Für die Beschreibung der funktionalen Anteile einer Klasse (die Methoden) sind insbesondere folgende. Kategorien wichtig: Verfahren der Erzeugung einer Datenstruktur, Verfahren der Änderung einer Datenstruktur, Verfahren des Löschens einer Datenstruktur, oder ähnliches.

Die Beschreibung zu den unterschiedlichen Kategorien werden hierzu im Programmcode des Programmsystems gespeichert. Das Dokumentationsprogramm erkennt, insbesondere anhand der Schlüsselwörter, diejenigen Abschnitte des Programmcodes, die sich auf eine Beschreibung entweder einer Klasse oder einer Datenstruktur oder eines funktionalen Anteils beziehen. Weiterhin faßt das Dokumentationsprogramm die erkannten Abschnitte der Beschreibung zusammen und macht sie dem Benutzer zugänglich.

Dadurch ist die Beschreibung Bestandteil der Implementierung und es besteht eine enge Kopplung zwischen der Beschreibung und der jeweiligen Realisierung. Mittels des Dokumentationsprogramms läßt sich somit eine Charakterisierung des Betriebs der Nebenstellenanlage 5 erstellen, wobei der Betrieb der Nebenstellenanlage 5 durch das Programm bzw. durch die Gesamtheit der das Programm bildenden Programmteile 60, 70 ermöglicht wird. Die Charakterisierung des Betriebs der Nebenstellenanlage 5 dient beispielsweise der Erstellung der Beschreibung aber auch der Analyse der Programmstruktur und der verwendeten Datenstrukturen. Die Beschreibung oder Dokumentation ist immer aktuell und somit auch von höherer Qualität. Weiterhin erfolgt eine Beschreibung eines Programmsystems mittels des Dokumentationsprogramms automatisch. Durch die Nichtbeachtung bestimmter Schlüsselwörter beziehungsweise bestimmter Beschreibungen die auf solche Schlüsselwörter folgen, ist das Dokumentationsprogramm weiterhin in der Lage, die Beschreibung des Programmsystems mehr oder weniger detailliert zu gestalten. Eine Darstellung für Entwickler beinhaltet beispielsweise mehr Informationen als eine Darstellung für Benutzer.

## Patentansprüche

1. Verfahren zur Charakterisierung, mittels eines Dokumentationsprogramms, des Betriebs einer Nebenstellenanlage (5), wobei die Nebenstellenanlage (5) von einem Programm gesteuert wird, wobei das Programm einen ersten Programmteil (60) und einen zweiten Programmteil (70) umfaßt, wobei das Programm Bezeichner umfaßt, wobei den Bezeichnern durch das Programm Daten zugeordnet werden, dadurch gekennzeichnet, daß durch das Programm wenigstens einem Bezeichner (63) in unterschiedlichen Programmteilen (60, 70) unterschiedliche Daten (66, 76) zugeordnet werden und daß mittels des Dokumentationsprogramms dem wenigstens einen Bezeichner (63) die Zuordnung wenigstens eines Teils der unterschiedlichen Daten (66, 76) in Abhängigkeit der Programmteile (60, 70) dargestellt. wird.

2. Verfahren nach Anspruch 1, dadurch gekennzeichnet, daß das Programm Schlüsselwörter umfaßt und daß die Zuordnung wenigstens eines Teils der unterschiedlichen Daten (66, 76) zu dem wenigstens einen Bezeichner (63) durch das Dokumentationsprogramm in Abhängigkeit der Schlüsselwörter dargestellt wird.

3. Verfahren nach einem der vorhergehenden Ansprüche, dadurch gekennzeichnet, daß durch das Dokumentationsprogramm die Zuordnung der unterschiedlichen Daten (66, 76) zu dem wenigstens einen Bezeichner (63) für alle unterschiedlichen Daten (66, 76) dargestellt wird.

4. Verfahren nach einem der vorhergehenden Ansprüche, dadurch gekennzeichnet, daß dem ersten Programmteil (60) eine erste Klasse (60) entspricht, daß dem zweiten Programmteil (70) eine zweite Klasse (70) entspricht und daß sich die zweite Klasse (70) von der ersten Klasse (60) ableitet.

5. Verfahren nach Anspruch 4, dadurch gekennzeichnet, daß die Klassen (60, 70) statische Anteile, insbesondere Definitionen, die während des Betriebs der Nebenstellenanlage nicht verändert werden, und dynamische Anteile, insbesondere Funktionalitäten, die während des Betriebs der Nebenstellenanlage verändert werden, umfassen und daß der wenigstens eine Bezeichner (63) dynamische Anteile der Klassen (60, 70) repräsentiert.
